# EUROPÄISCHE PATENTSCHRIFT

(11) **EP 1 591 192 B1**
(45) Veröffentlichungstag und Bekanntmachung des Hinweises auf die Patenterteilung: **28.05.2008**
(21) Anmeldenummer: 05008215.5
(22) Anmeldetag: 14.04.2005
(51) Int. Cl.: B23K 35/38, B23K 9/32

(54) **Schutzgas-Versorgungseinrichtung zum Lichtbogen-Fügen**
Shield gas distribution system for arc welding
Dispositif de distribution de gaz de protection pour le soudage à l'arc

(30) Priorität: 29.04.2004 DE 102004021066
(43) Veröffentlichungstag der Anmeldung: 02.11.2005
(73) Patentinhaber: Linde Aktiengesellschaft, 80807 München (DE)
(72) Erfinder: Ammann, Thomas, 81379 München (DE)
(74) Vertreter: Kasseckert, Rainer

(56) Entgegenhaltungen:
- FR-A- 2 646 496
- US-A1- 2003 234 385

## Beschreibung

Die Erfindung betrifft eine Schutzgas-Versorgungseinrichtung zur Vor-Ort-Versorgung von Arbeitsplätzen umfassend einen Flüssig-Argon-Speicher, einen Flüssig-Sauerstoff-Speicher oder einen Flüssig-Kohlendioxid-Speicher und einen Helium-Vorrat sowie einen ersten und einen zweiten Mischer, wobei der Flüssig-Argon-Speicher und der Flüssig-Sauerstoff/Kohlendioxid-Speicher über Leitungen mit der Einspeisungsseite des ersten Mischers und die Entnahmeseite des ersten Mischers mit mindestens einem Arbeitsplatz verbunden ist. Ferner betrifft die Erfindung ein Verfahren zur Vor-Ort-Herstellung verschiedener Schutzgasmischungen enthaltend ein Gas oder ein Gasgemisch aus den Komponenten Argon, Kohlendioxid oder Sauerstoff und Helium zum Lichtbogen-Fügen, insbesondere zum Lichtbogen-Schweißen, wobei das Argon, das Kohlendioxid und der Sauerstoff durch Verdampfen aus der flüssigen Phase bereitgestellt wird, und wobei das verdampfte Argon und der/das verdampfte Sauerstoff/Kohlendioxid vermischt wird.

Unter Lichtbogen-Fügen fällt sowohl das schon lange bekannte Schweißen mit Lichtbogen als auch das in jüngster Zeit an Bedeutung gewinnende Löten mit Lichtbogen unter Schutzgas. Des Weiteren gehört zum Lichtbogen-Fügen auch das Verbinden von artverschiedenen Werkstoffen, bei welchem ein Werkstoff aufgeschmolzen wird, während der andere nur erwärmt wird.

Beim Lichtbogenschweißen unter Schutzgas stellen inerte Gase den überwiegenden Anteil im Schutzgas. Das beim Schutzgasschweißen am häufigsten eingesetzte Inertgas ist Argon. Gasmischungen aus Argon und Sauerstoff oder Kohlendioxid werden v.a. bei der Verarbeitung von Baustählen, Rohrstählen, Feinbaukornstählen, Vergütungsstählen, Einsatzstählen, nichtrostenden Stählen, Sonderedelstählen, Nickelbasiswerkstoffen und hitzebeständigen Walz- und Schmiedestählen eingesetzt. Durch Zugabe von Helium in die Schutzgasmischung wird die Wärmebilanz des Schutzgases im Lichtbogen und in der Schmelze verbessert, wodurch werkstoffabhängig ein tieferer Einbrand, eine bessere Entgasung und eine bessere Benetzung erreicht wird. Dadurch werden mit Helium höhere Schweißgeschwindigkeiten erzielt.

Heliumhaltige Schutzgasmischungen werden deshalb bevorzugt bei mit Robotern ausgestatteten Schweißplätzen eingesetzt.

Es ist festzustellen, dass nur dann sehr gute Schweißergebnisse erzielt werden, wenn eine auf die vorliegende Schweißaufgabe hin optimierte Schutzgasmischung verwendet wird. Die Zusammensetzung der Schutzgasmischung ist dabei exakt auf Werkstoff, Beschaffenheit des Schweißgutes, Lichtbogenstabilität und Schweißgeschwindigkeit abgestimmt. Deshalb gibt es eine Vielzahl verschiedener. Schutzgasmischungen.

Um nun auch die optimale Schutzgasmischung benutzen zu können, muss diese in ausreichend großer Menge der Schweißvorrichtung zur Verfügung stehen. Normalerweise wird eine Schutzgasmischung mit mehreren Komponenten beim Gaselieferanten bereits fertig gemischt und in Gasflaschen zum Gasverbraucher geliefert. Der Gasverbraucher kann dann die fertige Gasmischung ohne weitere.Arbeitsschritte verwenden. Von Nachteil sind dabei die großen Gasmengen, welche zum Gasverbraucher geliefert werden müssen. Dies ist vor allem bei einem hohen Gasverbrauch aufwändig durchzuführen. Da sich durch Verflüssigung das Volumen eines Gases um ein vielfaches reduziert, werden große Gasmengen normalerweise flüssig geliefert und aufbewahrt. Die benötigte Gasmenge wird in Form von verdampfter Flüssigkeit entnommen. Bei der industriellen Fertigung, insbesonders beim Schweißen wird sehr viel Argon benötigt. Deshalb besitzen Großverbraucher in der Regel eine Flüssig-Argon-Vorsorgung. Auch eine Versorgung mit flüssigem Sauerstoff und flüssigem Kohlendioxid findet sich oft bei Großverbrauchern. Fertige Gasmischungen sind für den Großverbraucher umständlich in ihrer Handhabung, weshalb Großverbraucher eine Flüssig-Gas-Versorgung einer Flaschen- oder Bündelversorgung vorziehen.

Aus der US-A-2003 0234385 ist es bekannt, Argon aus einer Flüssig-Argon-Vorsorgung mit einer Vormischung aus Argon und/oder Helium und einem Dotiergas für die Vorbereitung eines Schutzgases zu mischen.

Die Bereitstellung von auf die vorliegende Schweiß- oder Lötaufgabe abgestimmten Schutzgasmischungen in großen Mengen ist jedoch technisch und in praktischer Durchführung nicht zufriedenstellend gelöst. Es existiert kein Verfahren in einer Werkhalle verschieden konzipierte Arbeitsplätze, die meist auch mit unterschiedlichen Fügeaufgaben betraut sind, mit der jeweils optmierten Schutzgasmischung zu versorgen und gleichzeitig vorhandene Flüssig-Gas-Versorgungen zu verwenden.

Der Erfindung liegt daher die Aufgabe zugrunde, eine Vorrichtung anzugeben, welche die Einbindung von Flüssig-Gas-Versorgungen ermöglicht, so dass mit unterschiedlichen Schweißaufgaben betraute oder unterschiedlich ausgestattete Arbeitsplätze mit den jeweils passenden Schutzgasmischungen versorgt werden können. Insbesondere soll eine Anpassung der Versorgung an manuell und Roboter betriebene Arbeitsplätze erreicht werden. Ferner ist es Aufgabe der Erfindung ein Verfahren zur Vor-Ort-Versorgung von Arbeitsplätzen anzugeben, welches die vorgenannten Problem löst.

Die Aufgabe wird für die Vorrichtung erfindungsgemäß dadurch gelöst, dass die Einspeisungsseite eines zweiten Mischers mit der Entnahmeseite des ersten Mischers und mit dem Helium-Vorrat und die Entnahmeseite des zweiten Mischers mit mindestens einem weiteren Arbeitsplatz über Leitungen verbunden ist. Erfindungsgemäß stellt der erste Mischer eine Argon-Sauerstoff/Kohlendixid-Mischung her, wobei die Flüssiggas-Versorgungen eingebunden sind. Leitungen führen diese Mischung zu mindestens einem Arbeitsplatz und zu einem zweiten Mischer. Der zweite Mischer fügt das Helium hinzu und leitet die Drei-Komponenten-Mischung mindestens zu einem weiteren Arbeitsplatz. Mit der erfindungsgemäßen Schutzgas-Versorgungseinrichtung ist es möglich, die Arbeitsplätze mit unterschiedlichen, auf die Fügeaufgabe abgestimmten Gasmischungen unter Einbindung der Flüssig-Gas-Versorgungen zu versorgen. Die sehr viel eingesetzten Zwei-Komponenten-Mischungen und ein großer Anteil der Drei-Komponenten-Mischungen stammen erfindungsgemäß aus der Flüssig-Gas-Versorgung. Eine Flüssig-Gas-Versorgung zeichnet sich dadurch aus, das große Mengen Gas sehr wenig Platz bei der Speicherung benötigen. Ferner ist eine Versorgung über Flüssig-Gas-Speicher organisatorisch sehr einfach: Wenn der Flüssigkeitsspiegel im Tank unter eine bestimmte Marke gefallen ist, muss ein Tanklastwagen angefordert werden, der den Tank wieder auffüllt. Eine Unterbrechung der Produktion ist dabei nicht notwendig. Diese Vorteile sind nun erfindungsgemäß für die Zwei- und die Drei-Komponenten-Mischungen einsetzbar. Von Nachteil sind die hohen Investitionskkosten einer Flüssig-Gas-Versorgung. Da erfindungsgemäß nicht nur für die Zwei-Komponenten-Mischung sondern auch für die Drei-Komponenten-Mischung Gas aus der Flüssig-Gas-Versorgung entnommen wird, steigt der Verbrauch an Flüssig-Gas. Dies erhöht die Wirtschaftlichkeit vorhandener Flüssig-Gas-Versorgung bezeihungsweise macht dies die Anschaffung einer Flüssig-Gas-Versorgung rentabel. Lediglich für einige Arbeitsplätze ist zusätzlich Helium in Flaschen oder Flaschenbündeln bereitzustellen. Eine Bereitstellung in Flaschen oder Bündel ist für Helium organisatorisch die einfachste Art. Jedoch ist die Zahl der Helium-Flaschenbündel klein im Vergleich zu der Zahl an Bündel die notwendig wäre, wenn die Drei-Komponenten-Mischung als fertige Gasmischung angeliefert werden würde. Als Helium-Vorrat sind zwei Faschenbündel besonders von Vorteil. Das zweite Bündel ermöglicht ein Weiterführen der Gasversorgung der Arbeitsplätze auch beim Austausch des leeren ersten Bündels. Arbeitspausen aufgrund von Bündelwechsel entfallen somit.

In vorteilhafter Ausgestaltung der Erfindung sind die mit der Entnahmeseite des ersten Mischers verbunden Arbeitsplätze mit Hand-Schweißgeräten und die mit der Entnahmeseite des zweiten Mischers verbundenen Arbeitsplätzen mit Roboter-Schweißgeräten ausgestattet. Die Vorteile der Erfindung zeigen sich in dieser Ausgestaltung in besonderer Weise, da Helium-haltige Mischungen an Roboter-Arbeitsplätzen bevorzugt verwendet wird, während an manuell betriebenen Arbeitsplätzen Mischungen ohne Heliumanteil vorgezogen werden.

In vorteilhafter Weiterbildung ist mindestens ein weiterer Arbeitsplatz über Leitungen direkt mit dem Flüssig-Argon-Tank verbunden. Somit ist es auch möglich Arbeitsplätze mit reinem Argon zu versorgen. Es zeigen sich so die Vorteile bezüglich der Flexibilität besonders ausgeprägt.

Vorteilhafterweise befinden sich alle an die Schutzgas-Versorgungseinrichtung angeschlossenen Arbeitsplätze in einer einzigen Werkhalle.

Mit Vorteil befinden sich die Flüssig-Gas-Tanks außerhalb und der Helium-Vorrat innerhalb der Werkhalle.

In vorteilhafter Ausgestaltung sind die die Argon-Sauerstoff/Kohlendioxid-Mischung führenden Leitungen als Ringleitung ausgestaltet, die am ersten Mischer angeschlossen ist. Die Ringleitung versorgt die Arbeitsplätze mit der Argon-Sauerstoff/Kohlendioxid-Mischung. An einer Stelle der Ringleitung ist eine Leitung, welche nicht direkt zu einem Arbeitsplatz führt, sondern zu dem zweiten Mischer. Der zweite Mischer verorgt nun gezielt die Arbeitsplätze, welche eine Argon-Sauerstoff/Kohlendioxid-Helium-Mischung benötigen. Mit dieser erfindungsgemäßen Ausgestaltung sind auch die Vorteile einer Ringleitung nutzbar. Eine Ringleitung zeichnet sich durch eine gleichmäßige Gasversorgung ohne Gasverluste aus.

Die Aufgabe wird hinsichtlich des Verfahrens dadurch gelöst, dass der Argon-Sauerstoff/Kohlendioxid-Mischung Helium zugegeben wird, wobei die Argon-Sauerstoff/Kohlendioxid-Mischung mindestens einem Arbeitsplatz und die Argon-Säuerstoff/Kohlendioxid-Helium-Mischung mindestens einem weiteren Arbeitsplatz zur Verfügung gestellt wird. Mit dem erfindungsgemäßen Verfahren zeigen sich alle vorgenannten Vorteile.

Vorteilhafterweise wird die Argon-Sauerstoff/Kohlendioxid-Mischung zum manuellen und die Argon-Sauerstoff/Kohlendioxid-Helium-Mischung zum. Roboter-Schweißen verwendet.

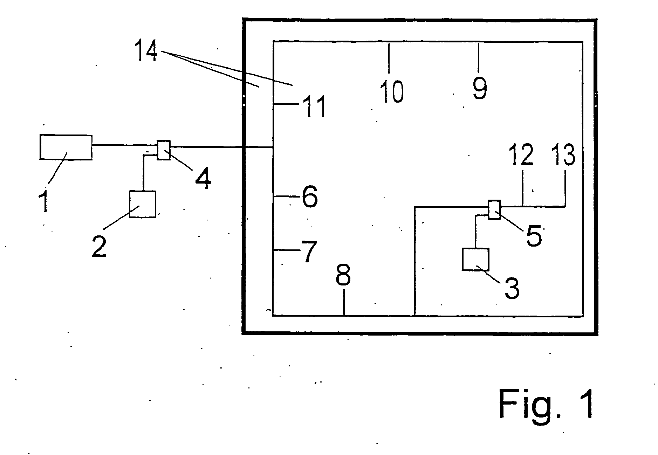

Im Folgenden soll die Erfindung anhand einer beispielhaften Ausgestaltung und mit Hilfe von Figur 1 näher erläutert werden. Hierzu zeigt Figur 1 eine beispielhafte Ausgestaltung der erfindungsgemäßen Schutzgas-Versorgungseinrichtung in einer Werkhalle mit mehreren Arbeitsplätzen.

Figur 1 zeigt symbolisch einen Flüssig-Argon-Speicher 1, einen Flüssig-Sauerstoff-Tank 2, einen Helium-Vorrat 3, zwei Mischer 4, 5, Zuführungen zu acht Arbeitsplätzen 6 bis 13 und eine Werkhalle 14. Das aus dem Flüssig-Argon-Speicher 1 entnommene gasförmige Argon wird in einem Zwei-Komponenten-Mischer 4 mit dem aus dem Flüssig-Sauerstoff-Tank 2 entnommenen gasförmigen Sauerstoff vermischt und zu den Arbeitsplätzen 6 bis 11 zugeführt. Die Argon-Sauerstoff-Mischung wird ferner an die Einspeisungsseite des Mischers 5 geführt. Auch der Helium-Vorrat 3 ist an der Einspeisungsseite des Mischers 5 angeschlossen. In dem Mischer 5 entsteht nun die an den Arbeitsplätzen 12 und 13 benötigte Argon-Sauerstoff-Helium-Mischung. Von der Entnahmeseite des Mischers 5 wird die Argon-Sauerstoff-Helium-Mischung zu den Arbeitsplätzen 12 und 13 geleitet. Alle Arbeitsplätze 6 bis 13 befinden sich in der Werkhalle 14. Die Werkhalle 14 ist somit mit einer Ringleitung ausgestattet. In diese Ringleitung wird die Argon-Sauerstoffmischung eingespeist. An den Arbeitsplätzen 12 und 13, an welchen mit Robotern geschweißt wird, wird eine Argon-Sauerstoff-Helium-Mischung benötigt. Deshalb wird an den Arbeitsplätzen 12 und 13 der Heliumvorrat 3 als Helium-Bündel bereitgestellt.

## Patentansprüche

1. Schutzgas-Versorgungseinrichtung zur Vor-Ort-Versorgung von Arbeitsplätzen (6-13) umfassend einen Flüssig-Argon-Speicher (1), einen Flüssig-Sauerstoff-Speicher (2) oder einen Flüssig-Kohlendioxid-Speicher (2) und einen Helium-Vorrat (3) sowie einen ersten und einen zweiten Mischer (4, 5), wobei der Flüssig-Argon-Speicher (1) und der Flüssig-Sauerstoff/Kohlendioxid-Speicher (2) über Leitungen mit der Einspeisungsseite des ersten Mischers (4) und die Entnahmeseite des ersten Mischers (4) mit mindestens einem Arbeitsplatz (6-11) verbunden ist, **dadurch gekennzeichnet, dass** die Einspeisungsseite eines zweiten Mischers (5) mit der Entnahmeseite des ersten Mischers (4) und mit dem Helium-Vorrat (3) und die Entnahmeseite des zweiten Mischers (4) mit mindestens einem weiteren Arbeitsplatz (12, 13) über Leitungen verbunden ist.

2. Schutzgas-Versorgungseinrichtung nach Anspruch 1, **dadurch gekennzeichnet, dass** die mit der Entnahmeseite des ersten Mischers (4) verbunden Arbeitsplätze (6-11) mit Hand-Schweißgeräten und die mit der Entnahmeseite des zweiten Mischers (5) verbundenen Arbeitsplätzen mit Roboter-Schweißgeräten (12, 13) ausgestattet sind.

3. Schutzgas-Versorgungseinrichtung nach Anspruch 1 oder 2, **dadurch gekennzeichnet, dass** mindestens ein weiterer Arbeitsplatz über Leitungen direkt mit dem Fiüssig-Argon-Tank verbunden ist.

4. Schutzgas-Versorgungseinrichtung nach einem der Ansprüche 1 bis 3, **dadurch gekennzeichnet, dass** sich alle an die Schutzgas-Versorgungseinrichtung angeschlossenen Arbeitsplätze in einer einzigen Werkhalle (14) befinden.

5. Schutzgas-Versorgungseinrichtung nach Anspruch 4, **dadurch gekennzeichnet, dass** sich die Flüssig-Gas-Tanks (1, 2) außerhalb und der Helium-Vorrat (3) innerhalb der Werkhalle (14) befinden.

6. Schutzgas-Versorgungseinrichtung nach einem der Ansprüche 1 bis 5, **dadurch gekennzeichnet, dass** die die Argon-Sauerstoff/Kohlendioxid-Mischung führenden Leitungen als Ringleitung ausgestaltet sind, die am ersten Mischer angeschlossen ist.

7. Verfahren zur Vor-Ort-Herstellung verschiedener Schutzgasmischungen enthaltend ein Gas oder ein Gasgemisch aus den Komponenten Argon, Kohlendioxid oder Sauerstoff und Helium zum Lichtbogen-Fügen, insbesondere zum Lichtbogen-Schweißen, wobei das Argon, das Kohlendioxid und der Sauerstoff durch Verdampfen aus der flüssigen Phase bereitgestellt wird, und wobei das verdampfte Argon und der/das verdampfte Sauerstoff/Kohlendioxid vermischt wird, **dadurch gekennzeichnet, dass** der Argon-Sauerstoff/Kohlendioxid-Mischung Helium zugegeben wird, wobei die Argon-Sauerstoff/Kohlendioxid-Mischung mindestens einem Arbeitsplatz und die Argon-Sauerstoff/Kohlendioxid-Helium-Mischung mindestens einem weiteren Arbeitsplatz zur Verfügung gestellt wird.

8. Verfahren nach Anspruch 7, **dadurch gekennzeichnet, dass** die Argon-Sauerstoff/Kohlendioxid-Mischung zum manuellen und die Argon-Sauerstoff/Kohlendioxid-Helium-Mischung zum Roboter-Schweißen verwendet wird.

## Claims

1. Protective-gas supply device for the on-site supply of workstations (6-13), comprising a liquid argon reservoir (1), a liquid oxygen reservoir (2) or a liquid carbon dioxide reservoir (2) and a helium stock (3) and also a first and a second mixer (4, 5), the liquid argon reservoir (1) and the liquid oxygen/carbon dioxide reservoir (2) being connected via lines to the feed side of the first mixer (4) and the extraction side of the first mixer (4) being connected to at least one workstation (6-11), **characterized in that** the feed side of a second mixer (5) is connected to the extraction side of the first mixer (4) and to the helium stock (3), and the extraction side of the second mixer (4) to at least one further workstation (12, 13) via lines.

2. Protective-gas supply device according to Claim 1, **characterized in that** the workstations (6-11) connected to the extraction side of the first mixer (4) are equipped with hand-operated welding appliances, and the workstations connected to the extraction side of the second mixer (5) are equipped with robot-operated welding appliances (12, 13).

3. Protective-gas supply device according to Claim 1 or 2, **characterized in that** at least one further workstation is connected directly to the liquid argon tank via lines.

4. Protective-gas supply device according to one of Claims 1 to 3, **characterized in that** all the workstations connected to the protective-gas supply device are located in a single workshop (14).

5. Protective-gas supply device according to Claim 4, **characterized in that** the liquid gas tank (1, 2) is located outside the workshop (14) and the helium stock (3) is located inside the latter.

6. Protective-gas supply device according to one of Claims 1 to 5, **characterized in that** the lines carrying the argon-oxygen/carbon dioxide mixture are designed as a ring line which is connected to the first mixer.

7. Method for the on-site production of various protective-gas mixtures containing a gas or a gas mixture consisting, as components, of argon, carbon dioxide or oxygen and helium, for electric-arc assembly, in particular for electric-arc welding, the argon, carbon dioxide and oxygen being provided by evaporation from the liquid phase, and the evaporated argon and the evaporated oxygen/carbon dioxide being intermixed, **characterized in that** helium is added to the argon-oxygen/carbon dioxide mixture, the argon-oxygen/carbon dioxide mixture being made available to at least one workstation, and the argon-oxygen/carbon dioxide-helium mixture being made available to at least one further workstation.

8. Method according to Claim 7, **characterized in that** the argon-oxygen/carbon dioxide mixture is used for manual welding, and the argon-oxygen/carbon dioxide-helium mixture is used for robot welding.

## Revendications

1. Dispositif d'alimentation en gaz protecteur pour l'alimentation sur site de postes de travail (6-13), qui comprend une réserve (1) d'argon liquide, une réserve (2) d'oxygène liquide ou une réserve (2) de dioxyde de carbone liquide ainsi qu'une réserve d'hélium (3) et qu'un premier et un deuxième mélangeur (4, 5), la réserve (1) d'argon liquide et la réserve (2) d'oxygène liquide ou de dioxyde de carbone liquide étant reliées par des conduits au côté d'alimentation du premier mélangeur (4), le côté de prélèvement du premier mélangeur (4) étant relié à au moins un poste de travail (6-11), **caractérisé en ce que** des conduits relient le côté d'alimentation d'un deuxième mélangeur (5) au côté de prélèvement du premier mélangeur (4) et à la réserve d'hélium (3) et le côté de prélèvement du deuxième mélangeur (4) à au moins un autre poste de travail (12, 13).

2. Dispositif d'alimentation en gaz protecteur selon la revendication 1, **caractérisé en ce que** les postes de travail (6, 11) reliés au côté de prélèvement du premier mélangeur (4) sont dotés d'appareils de soudage manuel, les postes de travail reliés au côté de prélèvement du deuxième mélangeur (5) étant équipés d'appareils de soudage (12, 13) à robot.

3. Dispositif d'alimentation en gaz protecteur selon les revendications 1 ou 2, **caractérisé en ce qu'**au moins un autre poste de travail est relié directement par des conduits à la cuve d'argon liquide.

4. Dispositif d'alimentation en gaz protecteur selon l'une des revendications 1 à 3, **caractérisé en ce que** tous les postes de travail raccordés au dispositif d'alimentation en gaz protecteur sont situés dans un même atelier (14).

5. Dispositif d'alimentation en gaz protecteur selon la revendication 4, **caractérisé en ce que** les cuves (1, 2) à gaz liquide sont situées à l'extérieur de l'atelier (14) et la réserve d'hélium (3) à l'intérieur de cet atelier (14).

6. Dispositif d'alimentation en gaz protecteur selon l'une des revendications 1 à 5, **caractérisé en ce que** les conduits qui emmènent le mélange d'argon et d'oxygène/dioxyde de carbone sont configurés comme conduit tubulaire raccordé au premier mélangeur.

7. Procédé de préparation sur site de différents mélanges de gaz protecteurs qui contiennent un gaz ou un mélange de gaz constitué des composants argon, dioxyde de carbone ou oxygène et hélium pour l'assemblage par arc lumineux, en particulier pour le soudage par arc lumineux, l'argon, le dioxyde de carbone et l'oxygène étant préparés par évaporation de leur phase liquide, l'argon vaporisé et/ou l'oxygène/dioxyde de carbone vaporisés étant mélangés, **caractérisé en ce qu'**on ajoute de l'hélium au mélange d'argon et d'oxygène/dioxyde de carbone, le mélange d'argon et d'oxygène/dioxyde de carbone étant apporté à au moins un poste de travail et le mélange d'argon, d'oxygène/dioxyde de carbone et d'hélium étant apporté à au moins un autre poste de travail.

8. Procédé selon la revendication 7, **caractérisé en ce que** le mélange d'argon et d'oxygène/dioxyde de carbone est utilisé pour le soudage manuel et le mélange d'argon, d'oxygène/dioxyde de carbone et d'hélium pour le soudage par robot.
